# EUROPÄISCHE PATENTSCHRIFT

(11) **EP 3 830 916 B1**
(45) Veröffentlichungstag und Bekanntmachung des Hinweises auf die Patenterteilung: **13.12.2023**
(21) Anmeldenummer: 19769029.0
(22) Anmeldetag: 27.08.2019
(51) Int. Cl.: H01T 19/02, F16F 7/10

(54) **KORONARING FÜR EINE HOCHSPANNUNGSVORRICHTUNG**
CORONA RING FOR A HIGH-VOLTAGE APPARATUS
ANNEAU ANTI-CORONA POUR UN DISPOSITIF HAUTE TENSION

(30) Priorität: 13.09.2018 DE 102018215561
(43) Veröffentlichungstag der Anmeldung: 09.06.2021
(73) Patentinhaber: Siemens Energy Global GmbH & Co. KG, 81739 München (DE)
(72) Erfinder: HEINRICH, Ulf, 14482 Potsdam (DE); RAMOS CORDERO, Edgar Armando, 10587 Berlin Charlottenburg (DE)
(86) Internationale Anmeldenummer: PCT/EP2019/072835
(87) Internationale Veröffentlichungsnummer: WO 2020/052965

(56) Entgegenhaltungen:
- EP-A1- 2 711 939
- EP-A1- 3 133 613
- WO-A1-2014/044550

## Beschreibung

Die Erfindung betrifft einen Koronaring für eine Hochspannungsvorrichtung und eine Hochspannungsvorrichtung mit einem Koronaring.

Hochspannungsvorrichtungen, wie z. B. aus der EP 2 711 939 A1 bekannt, sind aufgrund ihrer jeweiligen Form, Masse und/oder Materialien häufig besonders gefährdet, durch seismische Anregungen beschädigt oder zerstört zu werden und müssen daher insbesondere in erdbebengefährdeten Gebieten vor derartigen Beschädigungen oder Zerstörungen geschützt werden. Viele Hochspannungsvorrichtungen weisen einen Koronaring auf, um elektrische Entladungen in bestimmten Bereichen der jeweiligen Hochspannungsvorrichtung zu vermeiden oder zu reduzieren. Der Erfindung liegt die Aufgabe zugrunde, eine Hochspannungsvorrichtung, die einen Koronaring aufweist, vor Beschädigungen durch seismische Anregungen zu schützen.

Die Aufgabe wird erfindungsgemäß durch einen Koronaring mit den Merkmalen des Anspruchs 1 und eine Hochspannungsvorrichtung mit den Merkmalen des Anspruchs 3 gelöst. Vorteilhafte Ausgestaltungen der Erfindung sind Gegenstand der Unteransprüche.

Ein erfindungsgemäßer Koronaring für eine Hochspannungsvorrichtung weist einen eine Flüssigkeit aufweisenden Flüssigkeitstilger zur Schwingungsdämpfung auf.

Die Erfindung nutzt also einen Koronaring einer Hochspannungsvorrichtung, um Schwingungen der Hochspannungsvorrichtung zu dämpfen, die beispielsweise durch seismische Anregungen, insbesondere durch Erdbeben, verursacht werden. Dazu sieht die Erfindung vor, dass der Koronaring einen Flüssigkeitstilger zur Schwingungsdämpfung aufweist. Der Flüssigkeitstilger weist eine Flüssigkeit auf, die durch Schwingungen der Hochspannungsvorrichtung in Bewegung versetzt wird. Die Bewegung der Flüssigkeit dissipiert Schwingungsenergie der Hochspannungsvorrichtung und dämpft dadurch die Schwingungen der Hochspannungsvorrichtung. Die Erfindung ermöglicht eine sehr platzsparende und kostengünstige Dämpfung von Schwingungen einer Hochspannungsvorrichtung, da ein ohnehin vorhandener Koronaring zur Schwingungsdämpfung verwendet wird und ein Flüssigkeitstilger viel kostengünstiger realisiert werden kann als beispielsweise ein mechanischer Schwingungsdämpfer, der beispielsweise am Sockel einer Hochspannungsvorrichtung angeordnet wird. Überdies sind die Dämpfungseigenschaften eines Flüssigkeitstilgers durch die Wahl der Flüssigkeit, des Füllstands der Flüssigkeit und/oder der Geometrie des Flüssigkeitsbehälters sehr flexibel den jeweiligen Anforderungen anpassbar.

Bei der Erfindung weist der Koronaring als Flüssigkeitstilger wenigstens eine im Innern des Koronarings angeordnete Kammer auf, die teilweise mit der Flüssigkeit befüllt ist. Dabei ist in wenigstens einer Kammer wenigstens ein perforiertes, die Kammer teilendes Teilungsblech angeordnet. Jedes Teilungsblech verläuft beispielsweise wenigstens annähernd senkrecht zu einer Flüssigkeitsoberfläche der Flüssigkeit. Insbesondere kann der Koronaring eine einzige Kammer aufweisen, die von einem Gehäuse des Koronarings umschlossen wird. Durch ein in einer Kammer angeordnetes Teilungsblech können die Dämpfungseigenschaften des Flüssigkeitstilgers vorteilhaft verbessert und an die jeweiligen Anforderungen angepasst werden. Die Verwendung eines Bleches zur Teilung einer Kammer hat dabei die Vorteile, dass das Blech zur Abschirmung elektrischer Felder beitragen kann und in einfacher Weise, beispielsweise durch Schweißen, mit einem metallischen Gehäuse des Koronarings verbunden werden kann.

Eine erfindungsgemäße Hochspannungsvorrichtung weist einen erfindungsgemäßen Koronaring auf. Durch den erfindungsgemäßen Koronaring kann die Hochspannungsvorrichtung in platzsparender und kostengünstiger Weise vor Beschädigungen und Zerstörung durch Schwingungen, die beispielsweise durch seismische Anregungen verursacht werden, geschützt werden.

Beispielsweise weist die Hochspannungsvorrichtung einen Langstabisolator auf und der Koronaring verläuft in einer zu einer Längsachse des Langstabisolators orthogonalen Ebene um den Langstabisolator herum. Hochspannungsvorrichtungen mit Langstabisolatoren sind aufgrund deren Form und Höhe besonders gefährdet, durch Schwingungen beschädigt oder zerstört zu werden, da insbesondere ihre oberen Bereiche bei Schwingungen relativ weit verschoben werden. Daher eignet sich ein um einen Langstabisolator herum angeordneter erfindungsgemäßer Koronaring besonders gut zur Schwingungsdämpfung von Schwingungen derartiger Hochspannungsvorrichtungen.

Bei einer weiteren Ausgestaltung der Erfindung sind eine Reynolds-Zahl und/oder eine Dichte der Flüssigkeit und/oder ein Volumen und/oder ein Querschnitt des Flüssigkeitstilgers und/oder eine Rauheit einer die Flüssigkeit kontaktierenden Oberfläche des Flüssigkeitstilgers und/oder ein Füllstand der Flüssigkeit in dem Flüssigkeitstilger wenigstens einer Eigenfrequenz von Schwingungen der Hochspannungsvorrichtung angepasst, um Schwingungen der Hochspannungsvorrichtung mit der Eigenfrequenz zu dämpfen. Die vorgenannten Eigenschaften des Flüssigkeitstilgers bestimmen wesentlich dessen Dämpfungseigenschaften und eignen sich daher vorteilhaft zur Abstimmung des Flüssigkeitstilgers auf die jeweiligen Anforderungen. Die Dämpfung von Schwingungen mit Eigenfrequenzen der Hochspannungsvorrichtung ist besonders vorteilhaft, da Schwingungen mit diesen Frequenzen durch Resonanzeffekte besonders leicht zu Beschädigungen der Hochspannungsvorrichtung führen können.

Die Hochspannungsvorrichtung kann beispielsweise als ein Überspannungsableiter, Leistungsschalter, Trennschalter, Erdungsschalter oder Freileitungsmast ausgebildet sein. Derartige Hochspannungsvorrichtungen sind durch ihre Bauart häufig besonders gefährdet, durch Schwingungen beschädigt zu werden und weisen oft einen Koronaring auf. Daher eignet sich die Erfindung insbesondere zum Schutz derartiger Hochspannungsvorrichtungen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Schnittdarstellung einer Hochspannungsvorrichtung,
- FIG 2: eine Schnittdarstellung eines oberen Bereichs der in Figur 1 gezeigten Hochspannungsvorrichtung.

Einander entsprechende Teile sind in den Figuren mit denselben Bezugszeichen versehen.

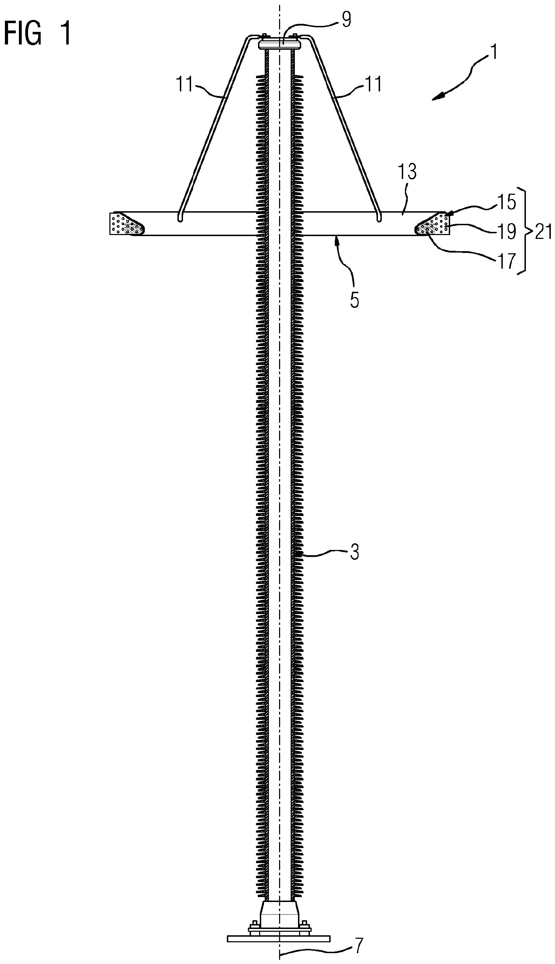

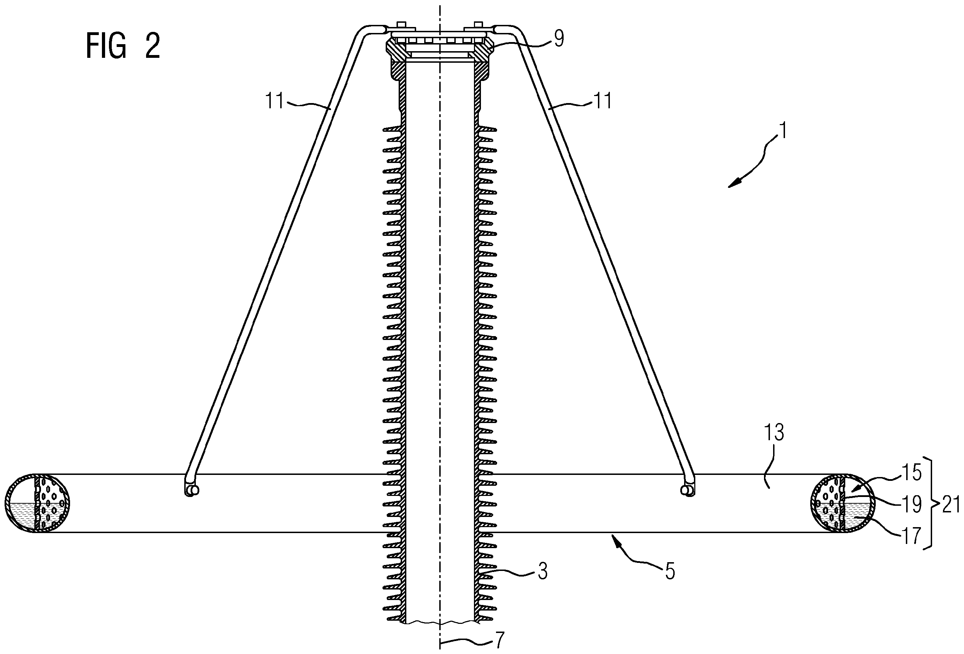

Die Figuren zeigen Schnittdarstellungen eines Ausführungsbeispiels einer erfindungsgemäßen Hochspannungsvorrichtung 1, wobei Figur 1 die gesamte Hochspannungsvorrichtung zeigt und Figur 2 einen oberen Bereich der Hochspannungsvorrichtung 1 zeigt.

Die Hochspannungsvorrichtung 1 weist einen Langstabisolator 3 und einen Koronaring 5 auf. Der Langstabisolator 3 ist beispielsweise aus einem Silikon oder Porzellan gefertigt und rohrartig mit um seine Längsachse verlaufenden Isolationsschirmen ausgebildet. Im Inneren des Langstabisolators 3 sind elektrische und/oder mechanische Bauelemente der Hochspannungsvorrichtung 1 angeordnet, die von der Funktion der Hochspannungsvorrichtung 1 abhängen und in den Figuren nicht dargestellt sind. Beispielsweise kann die Hochspannungsvorrichtung 1 als ein Überspannungsableiter, in dessen Langstabisolator 3 unter anderem Ableiterwiderstände, insbesondere Metalloxidwiderstände, angeordnet sind, oder als ein Leistungsschalter, in dessen Langstabisolator 3 unter anderem eine Unterbrechereinheit angeordnet ist, oder als ein Trenn- oder Erdungsschalter, in dessen Langstabisolator 3 unter anderem ein Getriebeelement zur Übertragung einer Antriebskraft auf ein Schaltelement des Trenn- oder Erdungsschalters angeordnet ist, ausgebildet sein.

Die Hochspannungsvorrichtung 1 weist ferner einen erfindungsgemäßen Koronaring 5 auf. Der Koronaring 5 verläuft in einer zu einer Längsachse 7 des Langstabisolators 3 orthogonalen Ebene um den Langstabisolator 3 herum. An einem oberen Ende des Langstabisolators 3 ist ein Verstärkungsring 9 angeordnet, an dem stabartige Halterungen 11 montiert sind, die den Koronaring 5 halten. Der Koronaring 5 weist ein geschlossenes Gehäuse 13 auf, das eine Kammer 15 umschließt, die teilweise mit einer Flüssigkeit 17 befüllt ist. In der Kammer 15 ist ein perforiertes, die Kammer 15 teilendes Teilungsblech 19 angeordnet. Das Teilungsblech 19 verläuft wenigstens annähernd senkrecht zu einer Flüssigkeitsoberfläche der Flüssigkeit 17 von einer Unterseite zu einer Oberseite des Gehäuses 13. Das Gehäuse 13 und das Teilungsblech 19 sind jeweils aus einem elektrisch leitfähigen Material, beispielsweise jeweils aus Aluminium, gefertigt. Das Teilungsblech 19 ist beispielsweise an dem Gehäuse 13 angeschweißt.

Die Kammer 15 mit der darin angeordneten Flüssigkeit 17 und dem Teilungsblech 19 ist als ein Flüssigkeitstilger 21 zur Schwingungsdämpfung von Schwingungen der Hochspannungsvorrichtung 1 ausgebildet, die beispielsweise durch seismische Anregungen, insbesondere durch Erdbeben, verursacht werden. Insbesondere sind eine Reynolds-Zahl und/oder eine Dichte der Flüssigkeit 17 und/oder ein Volumen und/oder ein Querschnitt der Kammer 15 und/oder eine Rauheit einer die Flüssigkeit 17 kontaktierenden Oberfläche des Gehäuses 13 und/oder ein Füllstand der Flüssigkeit 17 in der Kammer 15 wenigstens einer Eigenfrequenz von Schwingungen der Hochspannungsvorrichtung 1 angepasst, um Schwingungen der Hochspannungsvorrichtung 1 mit der Eigenfrequenz zu dämpfen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Koronaring (5) für eine Hochspannungsvorrichtung (1), wobei der Koronaring (5) einen eine Flüssigkeit (17) aufweisenden Flüssigkeitstilger (21) zur Schwingungsdämpfung aufweist, wobei der Flüssigkeitstilger (21) wenigstens eine im Innern des Koronarings (5) angeordnete Kammer (15) aufweist, die teilweise mit der Flüssigkeit (17) befüllt ist, **dadurch gekennzeichnet, dass** in wenigstens einer Kammer (15) wenigstens ein perforiertes, die Kammer (15) teilendes Teilungsblech (19) angeordnet ist.

2. Koronaring (5) nach Anspruch 1, wobei jedes Teilungsblech (19) wenigstens annähernd senkrecht zu einer Flüssigkeitsoberfläche der Flüssigkeit (17) verläuft.

3. Hochspannungsvorrichtung (1) mit einem gemäß einem der vorhergehenden Ansprüche ausgebildeten Koronaring (5).

4. Hochspannungsvorrichtung (1) nach Anspruch 3 mit einem Langstabisolator (3), wobei der Koronaring (5) in einer zu einer Längsachse (7) des Langstabisolators (3) orthogonalen Ebene um den Langstabisolator (3) herum verläuft.

5. Hochspannungsvorrichtung (1) nach Anspruch 3 oder 4, wobei eine Reynolds-Zahl und/oder eine Dichte der Flüssigkeit (17) und/oder ein Volumen und/oder ein Querschnitt des Flüssigkeitstilgers (21) und/oder eine Rauheit einer die Flüssigkeit (17) kontaktierenden Oberfläche des Flüssigkeitstilgers (21) und/oder ein Füllstand der Flüssigkeit (17) in dem Flüssigkeitstilger (21) wenigstens einer Eigenfrequenz von Schwingungen der Hochspannungsvorrichtung (1) angepasst sind, um Schwingungen der Hochspannungsvorrichtung (1) mit der Eigenfrequenz zu dämpfen.

6. Hochspannungsvorrichtung (1) nach einem der Ansprüche 3 bis 5, die als ein Überspannungsableiter ausgebildet ist.

7. Hochspannungsvorrichtung (1) nach einem der Ansprüche 3 bis 5, die als ein Leistungsschalter ausgebildet ist.

8. Hochspannungsvorrichtung (1) nach einem der Ansprüche 3 bis 5, die als ein Trennschalter ausgebildet ist.

9. Hochspannungsvorrichtung (1) nach einem der Ansprüche 3 bis 5, die als ein Erdungsschalter ausgebildet ist.

10. Hochspannungsvorrichtung (1) nach einem der Ansprüche 3 bis 5, die als ein Freileitungsmast ausgebildet ist.

## Claims

1. Corona ring (5) for a high-voltage apparatus (1), wherein the corona ring (5) has a liquid absorber (21) having a liquid (17) for vibration damping,
wherein the liquid absorber (21) has at least one chamber (15) which is arranged in the interior of the corona ring (5) and is partly filled with the liquid (17),
**characterized in that** at least one perforated dividing plate (19) dividing the chamber (15) is arranged in at least one chamber (15).

2. Corona ring (5) according to Claim 1, wherein each dividing plate (19) extends at least approximately perpendicularly to a liquid surface of the liquid (17).

3. High-voltage apparatus (1) having a corona ring (5) designed according to either of the preceding claims.

4. High-voltage apparatus (1) according to Claim 3, having a long-rod insulator (3), wherein the corona ring (5) extends around the long-rod insulator (3) in a plane that is orthogonal to a longitudinal axis (7) of the long-rod insulator (3).

5. High-voltage device (1) according to Claim 3 or 4, wherein a Reynolds number and/or a density of the liquid (17) and/or a volume and/or a cross section of the liquid absorber (21) and/or a roughness of a surface of the liquid absorber (21) that contacts the liquid (17) and/or a fill level of the liquid (17) in the liquid absorber (21) is matched to at least one natural frequency of vibrations of the high-voltage apparatus (1), in order to damp vibrations of the high-voltage apparatus (1) having the natural frequency.

6. High-voltage apparatus (1) according to one of Claims 3 to 5, which is designed as a surge arrester.

7. High-voltage apparatus (1) according to one of Claims 3 to 5, which is designed as a power circuit-breaker.

8. High-voltage apparatus (1) according to one of Claims 3 to 5, which is designed as a disconnector.

9. High-voltage apparatus (1) according to one of Claims 3 to 5, which is designed as an earthing switch.

10. High-voltage apparatus (1) according to one of Claims 3 to 5, which is designed as an overhead line mast.

## Revendications

1. Anneau (5) à effet de couronne pour un dispositif (1) de haute tension, dans lequel l'anneau (5) à effet de couronne a, pour l'amortissement des vibrations, un amortisseur (21) à liquide comportant un liquide (17), dans lequel l'amortisseur (21) à liquide comporte au moins une chambre (15), qui est montée à l'intérieur de l'anneau (5) à effet de couronne et qui est remplie en partie du liquide (17), **caractérisé en ce que** dans au moins une chambre (15) est disposée au moins une tôle (19) de séparation perforée séparant les chambres (15).

2. Anneau (5) à effet de couronne suivant la revendication 1, dans lequel chaque tôle (19) de séparation s'étendant au moins à peu près perpendiculairement à une surface du liquide (17).

3. Dispositif (1) à haute tension comprenant un anneau (5) à effet de couronne constitué suivant l'une des revendications précédentes.

4. Dispositif (1) à haute tension suivant la revendication 3, comprenant un isolateur (3) à long fût, dans lequel l'anneau (5) à effet de couronne s'étend autour de l'isolateur (3) à long fût dans un plan orthogonal à un axe (7) longitudinal de l'isolateur (3) à long fût.

5. Dispositif (1) à haute tension suivant la revendication 3 ou 4, dans lequel un nombre de Reynolds et/ou une masse volumique du liquide (17) et/ou un volume et/ou une section transversale de l'amortisseur (21) à liquide et/ou une rugosité d'une surface, en contact avec le liquide (17), de l'amortisseur (21) à liquide et/ou un niveau du liquide (17) dans l'amortisseur (21) à liquide sont adaptés à au moins une fréquence propre des vibrations du dispositif (1) à haute tension pour amortir des vibrations du dispositif (1) à haute tension ayant la fréquence propre.

6. Dispositif (1) à haute tension suivant la revendication 3 à 5, qui est sous la forme d'un parafoudre.

7. Dispositif (1) à haute tension suivant l'une des revendications 3 à 5, qui est sous la forme d'un disjoncteur.

8. Dispositif (1) à haute tension suivant l'une des revendications 3 à 5, qui est sous la forme d'un sectionneur.

9. Dispositif (1) à haute tension suivant l'une des revendications 3 à 5, qui est sous la forme d'un interrupteur de mise à la terre.

10. Dispositif (1) à haute tension suivant l'une des revendications 3 à 5, qui est sous la forme d'un mât de ligne arienne.
